# EUROPÄISCHE PATENTANMELDUNG

(11) **EP 0 704 960 A1**
(43) Veröffentlichungstag der Anmeldung: **03.04.1996**
(21) Anmeldenummer: 95114725.5
(22) Anmeldetag: 19.09.1995
(51) Int. Cl.: H02N 2/04, H01L 41/09

(54) **Ultraschallmotor mit einem Schwingstator aus einem elastischen Material**

(30) Priorität: 26.06.1995 DE 19523174; 20.10.1994 DE 4437487; 29.09.1994 DE 4434827
(71) Anmelder: AEG KLEINMOTOREN GmbH, D-26133 Oldenburg (DE)
(72) Erfinder: Brüggemann, Manfred, D-26203 Wardenburg (DE); Altmann, Manfred, D-26133 Oldenburg (DE)
(74) Vertreter: Vogl, Leo, Dipl.-Ing.

(57) **Zusammenfassung**

Ein Ultraschallmotor (1) mit einem Schwingstator (3) aus einein elastischen Material, an dem Ultraschalloszillatoren zur Anregung von Wanderwellen mit Ultraschallfrequenz in dein Schwingstator (3) befestigt sind, und mit einein Rotor (15), der unter Druck in Reibkontakt mit einem Oberflächenbereich des Schwingstators (3) steht, wird erfindungsgemäß dadurch vereinfacht, daß der Schwingstator (3) aus Glas oder aus einem elektrisch leitenden Verbundwerkstoff mit einem hohen Elastizitätsmodul aus Fasern und Glas besteht. Hierdurch wird ein kostengünstiger Ultraschallmotor (1) mit einem verbesserten Schwingverhalten geschaffen, wobei die Drehmomentenübertragung auf den Rotor (15) durch die Erhöhung des Elastizitäsmodules verbessert wird.

## Beschreibung

Die Erfindung betrifft einen Ultraschallmotor mit einem Stator aus einem elastischen Material, der im Oberbegriff des Patentanspruchs 1 angegebenen Art.

Bei einem Ultraschallmotor wird ein Antriebsmoment mit Hilfe eines Ultraschalloszillators, z. B. eines Piezoelektrikums oder eines Magnetostriktionselementes erzeugt. Ein solcher Ultraschallmotor, wie er z. B. aus dem US-Patent 4, 562, 374 bekannt ist, besteht aus einem Rotor und einem Stator aus elastischem Material, wobei in letzterem durch Ultraschalloszillatoren mechanische Wellen angeregt werden. Rotor und Stator stehen unter axialem Druck im Bereich einer Kontaktfläche in Kontakt, die mit einem geeigneten Reibbelag versehen ist. Vorteile solcher Motoren sind u. a. die Möglichkeit, ohne Getriebe hohe Drehmomente bei anderwenderfreundlichen niedrigen Drehzahlen zu erzeugen, ihr kleines Bauvolumen mit geringem Gewicht und hoher Energiedichte sowie ein hohes Haltemoment im passiven Zustand.

Das in einem piezoelektrischen Wanderwellenmotor verwendete Antriebsprinzip wird in einem Artikel in JEE (June 1986, P.66-70) dargestellt. Danach ist an dem in einem solchen Motor verwendeteten Schwingstator eine kreisringförmige Piezokeramikscheibe befestigt, die mit Elektroden versehen und mit dein eigentlichen Schwingstator verliebt ist. Dieser Schwingstator ist als Metallring oder als kreisförmige Metallscheibe ausgebildet, wobei dieses Metall aus Messing oder Nirostahl besteht. Um die Amplituden der umlaufenden Wanderwellen zu verstärken, sind die bekannten metallischen Schwingstatoren mit Schlitzen versehen, welche wirtschaftlich nur durch zusätzliche Arbeitsgänge wie Sägen oder Fräsen eingebracht werden können. Andere mögliche Verfahren zur Herstellung der Schlitze sind Laserschneiden oder Wasserstrahlschneiden. Diese Verfahren sind aber zu langsam und daher unwirtschaftlich.

Der Erfindung liegt die Aufgabe zugrunde, einen Ultraschallmotor mit einem Schwingstator aus einem elastischen Material zu schaffen, der einfach und billig herzustellen ist sowie dabei eine Verstärkung der Drehmomentenübertragung auf den Rotor auf einfachste Weise ermöglicht. Diese Aufgabe wird durch die im Patentanspruch 1 gekennzeichneten Merkmale gelöst.

Der aus einem Glas oder einem Verbundwerkstoff aus Glas und Fasern bestehende Schwingstator gewährleistet aufgrund seines hohen Elastizitätsmoduls und der geringen Dichte ein wesentlich verbessertes Schwingverhalten, wobei die Schlitze in dem Schwingstator entfallen können. Zur Erhöhung der Drehmomentenübertragung auf den Rotor werden die Schwingstatoren gleich bei der Herstellung mit eingepreßten Schlitzen versehen.

Da die Ausdehnungskoeffizienten von Piezokeramik und den Materialien des Schwingstators annähernd gleich sind, treten auch weniger Scherkräfte in den Klebeverbindungen zwischen dem Schwingstator und den Piezokeramiken auf. Daher sind die Anforderungen an den Kleber nicht so hoch, wodurch der Einsatz billiger Klebstoffe ermöglicht wird.

Außerdem erfordert der Schwingstator aus Glaskeramik eine geringe Dicke als ein Schwingstator aus Metall. Hierdurch wird Material eingespart.

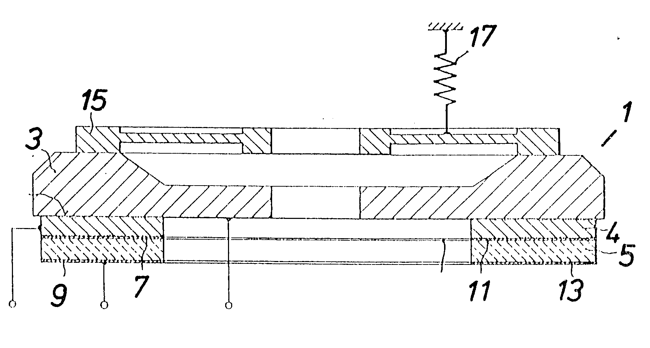

Weitere vorteilhafte Ausgestaltungen des Erfindungsgegenstandes sind den weiteren Unteransprüchen zu entnehmen.
Die Erfindung wird anhand eines Ausführungsbeispieles näher erläutert. Die Figur zeigt einen Schnitt durch einen Ultraschallmotor 1 mit einem Schwingstator 3 aus einem elastischen Material, an welchem Ultraschalloszillatoren zur Anregung von Wanderwellen mit Ultraschallfrequenz in dem Schwingstator 3 befestigt sind. Die Ultraschalloszillatoren können aus magnetostriktiven, elektrostriktiven oder piezokeramischen Elementen bestehen, wobei in der Figur z. B. eine kreisringförmige Piezokeramikscheibe 5 dargestellt ist. Beiderseits dieser Piezokeramikscheibe 5 sind Arbeitselektroden 7/9 und 11/13 angeordnet, welche mit dem Schwingstator 3, der als Gegenelektrode dient, zusammen ein Anregeystem bilden. Über die Wanderwellen wird ein Rotor 15 in Drehrichtung angetrieben, der unter Druck, z. B. einer Feder 17 in Reibkontakt mit einem Oberflächenbereich des Schwingstators 3 steht.

Der Schwingstator 3 besteht erfindungsgemäß aus Glas oder aus einem elektrisch leitenden Verbundwerkstoff mit einem hohen Elastizitätsmodul aus Fasern und Glas. In vorteilhafter Ausgestaltung besteht der Schwingstator 3 aus einem Borsilikatglas, welches zur Erhöhung des Elastizitätsmodules durch Zusätze von chemischen Elementen, z. B. von Stickstoff oder Kalium chemisch verfestigt ist. Zum Abbau von Spannungen und zur Erhöhung der Festigkeit wird das Borsilikatglas noch in einem Wärmeprozeß gehärtet. Hierdurch werden auch die Oberflächenstrukturen verbessert. Auch kann der Schwingstator 3 aus einem Verbundwerkstoff, insbesondere aus einem faserverstärkten Glas oder aus einem faserverstärkten Glaskeramikmaterial bestehen. Hierdurch wird eine wirtschaftliche Herstellung des Schwingstators ermöglicht, wobei evtl. erforderliche Schlitze oder Zähne gleich miteingepreßt werden können. Hierdurch wird die Drehmomentenübertragung auf den Rotor 15 auf einfachste Weise verstärkt. Der Schwingstator 3 mit den Zähnen oder Schlitzen besteht z. B. aus einem Preßteil. Im Rahmen der Erfindung ist es auch möglich, daß der Schwingstator 3 nur im Bereich der Zähne oder Schlitze aus einem Borsilikatglas besteht, während er im Plattenbereich aus einer glasfaserverstärkten Glaskeramik gefertigt ist. Die Verbundwerkstoffe zeichnen sich durch einen wesentlich höheren Elastizitätsmodul und einer geringen Dichte aus, so daß hierdurch auf einfachste Weise höhere Amplituden für die Wanderwellen in dem Schwingstator 3 erzeugt werden. Die piezokeramischen, elektrostriktiven oder magnetostriktiven Elemente und die Verbundwerkstoffe des Schwingstators 3 weisen annähernd gleiche Ausdehnungskoeffizienten auf, so daß keine Scherkräfte in den Klebeverbindungen zwischen dem Schwingstator 3 und der Piezokeramikscheibe 5 auftreten. Die Anforderungen an den Kleber für die Klebeverbindungen zwischen der Piezokeramikscheibe 5 und dem Schwingstator 3 können herabgesetzt werden. Da der Schwingstator 3 dünner ausgeführt werden kann als ein Metallstator, wird zusätzlich Material eingespart.

Die aus piezokeramischem, elektrostriktivem oder magnetostriktivem Material bestehenden Ultraschalloszillatoren werden üblicherweise mittels eines Klebers an dem Schwingstator 3 befestigt. Zu diesem Zweck wird erfindungsgemäß ein Kleber eingesezt, der durch Licht einer bestimmten Wellenlänge aushärtbar ist. Hierdurch wird die Herstellung des Schwingstators 3 vereinfacht.

Im Rahmen der Erfindung kann statt eines Klebers auch vorteilhaft Glaslot zum Befestigen der Keramik an dem Stator verwendet werden, wobei die Polarisierung des Keramikmaterials erst nach der Komplettierung des Schwingstators 3 vorgenommen wird.

Der erfindungsgemäße Ultraschallmotor zeichnet sich durch eine einfache und billige Herstellung aus, wobei das Schwingverhalten gegenüber den bekannten Schwingstatoren aus Metall noch verbessert wird.

## Patentansprüche

1. Ultraschallmotor mit einem Schwingstator aus einem elastischen Material, an dem Ultraschalloszillatoren zur Anregung von Wanderwellen mit Ultraschallfrequenz in dem Schwingstator befestigt sind, und mit einem Rotor, der unter Druck in Reibkontakt mit einem Oberflächenbereich des Schwingstator steht, **dadurch gekennzeichnet**, daß der Schwingstator (3) aus Glas oder einem elektrisch leitenden Verbundwerkstoff aus Glas und Fasern besteht.

2. Ultraschallmotor nach Anspruch 1, **dadurch gekennzeichnet**, daß der Schwingstator (3) aus einem normalen Borsilikatglas besteht.

3. Ultraschallmotor nach Anspruch 2, **dadurch gekennzeichnet**, daß das Borsilikatglas in einem Wärmeprozeß gehärtet ist.

4. Ultraschallmotor nach Anspruch 2, **dadurch gekennzeichnet**, daß das Borsilikatglas zur Erhöhung des Elastizitätsmodules durch Zusätze von chemischen Elementen z. B. von Stickstoff oder Kalium chemisch verfestigt ist.

5. Ultraschallmotor nach Anspruch 1, **dadurch gekennzeichnet**, daß der Verbundwerkstoff aus einem faserverstärkten Glas besteht.

6. Ultraschallmotor nach Anspruch 1, **dadurch gekennzeichnet**, daß der Verbundwerkstoff aus einem faserverstärkten Glaskeramikmaterial besteht.

7. Ultraschallmotor nach einem der vorhergehenden Ansprüche, **dadurch gekennzeichnet**, daß die Oberfläche des Schwingstators (3) zur Verstärkung der Drehmomentenübertragung zum Rotor (15) mit Schlitzen und Zähnen versehen ist.

8. Ultraschallmotor nach einem der vorhergehenden Ansprüche, **dadurch gekennzeichnet**, daß der Schwingstator (3) aus einem Preßteil besteht.

9. Ultraschallmotor nach einem der vorhergehenden Ansprüche, **dadurch gekennzeichnet**, daß der Schwingstator (3) im Bereich der Zähne aus einem Borsilikatglas und im Plattenbereich aus einem faserverstärkten Glas oder einer faserverstärkten Glaskeramik besteht.

10. Ultraschallmotor nach einem der vorhergehenden Ansprüche, **dadurch gekennzeichnet**, daß als Ultraschalloszillatoren piezokeramische, elektrostriktive oder magnetostriktive Elemente verwendet werden, deren Ausdehnungskoeffizienten den Ausdehnungskoeffizienten der Materialien des Schwingstators (3) zumindest annähernd entsprechen.

11. Ultraschallmotor nach einem der vorhergehenden Ansprüche, wobei die Ultraschalloszillatoren mittels eines Klebers an dem Schwinstator (3) befestigt sind, **gekennzeichnet durch** einen Kleber, welcher durch Licht einer bestimmten Wellenlänge aushärtbar ist.

12. Ultraschallmotor nach einem der Ansprüche 1-9, **dadurch gekennzeichnet**, daß das Befestigungsmittel für den aus einem Keramikmaterial hergestellten Ultraschalloszillator aus Glaslot besteht.

13. Ultraschallmotor nach Anspruch 11, **dadurch gekennzeichnet**, daß die Polarisierung des Keramikmaterials nach der Komplettierung des Schwingstators (3) erfolgt.
